# EUROPEAN PATENT SPECIFICATION

(11) **EP 0 765 789 B1**
(45) Date of publication and mention of the grant of the patent: **28.06.2000**
(21) Application number: 96307130.3
(22) Date of filing: 27.09.1996
(51) Int. Cl.: B60T 13/52

(54) **Improvements in pneumatically-operated boosters for vehicle braking systems**
Pneumatische Kraftverstärker für Kraftfahrzeugbremsanlagen
Amplificateur pneumatique pour systèmes de freinage de véhicules

(30) Priority: 28.09.1995 GB 9519753
(43) Date of publication of application: 02.04.1997
(73) Proprietor: Lucas Industries Limited, London W1Y 4DJ (GB)
(72) Inventor: Byrnes, Sean, Kings Heath, Birmingham B14 7ND (GB)
(74) Representative: Spall, Christopher John

(56) References cited:
- WO-A-96/17759
- WO-A-96/17760
- WO-A-97/01470
- DE-A- 2 845 794

## Description

This invention relates to improvements in pneumatically-operated boosters for vehicle braking systems of the kind in which a wall is movable in a booster housing when subjected to pressure differential in order to augment a brake-applying force from a pedal which, in turn, is applied to a master cylinder, and at least one tie-rod extends through the movable wall and the booster housing in order to carry the master cylinder from a bulk head of a vehicle. The invention also relates to a new construction of tie-rod for use in a booster of the kind set forth.

Problems exist in installing boosters of the kind set forth in the limited space available in engine compartments of vehicles. Since, of necessity, the booster and the master cylinder which it is adapted to operate, are located in close proximity to the engine and other mechanical components of substantial mass. In the event of a vehicle being involved in an accident with the engine and other mechanical components moving in a rearward direction towards the passenger compartment, as a result of the master cylinder collapsing the housing of the booster there may be a danger of the tie-rod being forced back into the passenger compartment with a consequent risk of injury to occupants of the vehicle.

DE-A-2845794 shows a pneumatically operated booster having the pre-characterising features of claim 1. A tie rod is disclosed having the pre-characterising features of claim 10.

WO 96/17760 shows a servo having a deformable body including a front portion on which is exerted a compressive force by a nut secured at the end of a tie rod, the nut being located outside of the body.

WO 97/01470 shows a vacuum servo brake fitted with force transmission bolts which are provided with predetermined breaking points.

WO 96/17759 shows a pneumatic brake servo having an axially compressible tie rod which includes telescoping parts.

WO 96/17760, WO 97/01470 and WO 96/17759 are cited as being state of the art according to article 54(3) EPC.

According to one aspect of our invention, in a booster of the kind set forth, the tie-rod is adapted to collapse when subjected to a compressive force substantially in an axial direction, and the tie-rod includes a collapsible substantially inextensible member which is tensioned to form a tie between a pair of end fittings adapted to co-operate with opposed end walls of the booster housing and which are also adapted to be coupled between a bulk head and a master cylinder adapted to be operated by the booster, and whereby the end fittings are held at a predetermined spacing by means of a spacer tube of which opposite ends co-operate with the fittings and with a substantial clearance provided between the tube and the inextensible member, a tensile force being applied between the two fittings from the member to maintain the fittings in abutment with the ends of the tube.

This ensures that, in an accident, the tie-rod cannot be displaced through the bulk head into the passenger compartment.

The inextensible member may be of single or multi-filament construction.

When a compressive force is applied to the tie-rod the tube buckles at a given compressive load determined by the tensile load pre-set in the tie-rod in accordance with the tensile force applied to the inextensible member.

When installed in the booster radial flanges on the end fittings co-operate with internal faces of the end walls of the booster housing surrounding openings through which the fittings project and the external surface of the tube comprises a running surface with which a seal on the movable wall sealingly engages.

Some embodiments of our invention are illustrated in the accompanying drawings in which:-
**Figure 1** is a longitudinal section through a pneumatically-operated booster illustrating its installation in a vehicle in combination with a portion of an hydraulic master cylinder;
**Figure 2** is an illustration, on an enlarged scale, of a section through the booster of Figure 1 including a section through the tie-rod;
**Figure 3** shows a connection between an end fitting and one end of a spacer tube.
**Figure 4** is a longitudinal section through a modified tie-rod;
**Figure 5** is a plan of one end of the inextensible member;
**Figure 6** is a plan of an end fitting;
**Figure 7** is an end view of the fitting of Figure 6;
**Figures 8 and 9** shows another method of connecting the inextensible member to an end fitting;
**Figures 10, 11 and 12** shows modified constructions which avoid mechanical deformation;
**Figure 13** shows another method;
**Figure 14** shows a further method; and
**Figure 15** shows yet another method.

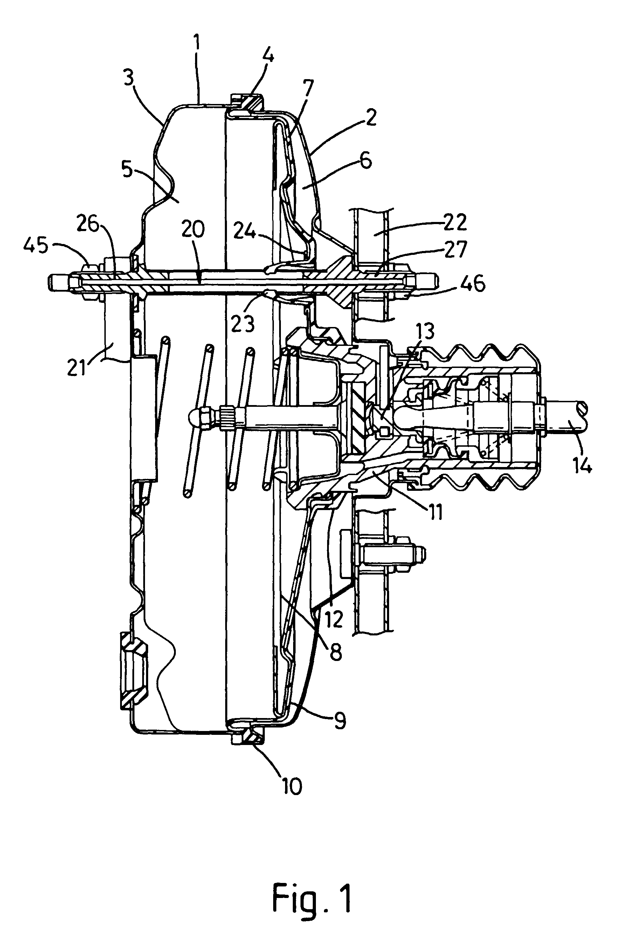

The vacuum-suspended pneumatic booster illustrated in Figures 1 to 3 of the accompanying drawings comprises a housing 1, in turn comprising a pair of complementary shells 2 and 3, each of dished outline. The two shells are secured together at their peripheral edges by a coupling 4, suitably defined by a crimping or similar operation. The interior of the housing is divided into a front chamber 5 of constant pressure and a rear, variable pressure, chamber 6 by means of a movable wall 7.

The movable wall comprises a piston 8 supported by a rolling diaphragm 9. An annular bead 10 at the outer peripheral edge of the diaphragm 9 provides a seal between the two shells 2 and 3 at the coupling 4. The inner end of the piston 8 is sealed against a hub member 11 by means of a thickening 12 at the inner edge of the diaphragm 9.

A valve mechanism 13 adapted to be operated by a pedal operated rod 14 is housed in the hub member 11 and controls operation of the booster in a known manner.

A tie-rod 20 extends axially through the housing 1 and movable wall 7. The tie-rod 22 is adapted for mounting the booster in an engine compartment of a vehicle and provides a mounting for a master cylinder 21 so that it can be carried from a bulk head 22. The tie-rod 20, extends through the housing 1, and also acts to maintain the spacing between the shells 2 and 3.

The diaphragm 9 is provided with a sealing boot 23 which is integral with and projects forwardly from the diaphragm and through a complementary opening 24 in the piston. The sealing boot 23 forms a seal with the tie-rod 20.

The tie-rod 20 comprises an axially extending substantially inextensible member 25 of single or multi-filament construction, suitably of metal or carbon fibres. For example the inextensible member may comprise a length of high tensile cable or a single filament wire. The inextensible member is coupled at opposite ends between a pair of outer and inner end fittings 26 and 27 which are held in an axially spaced, predetermined fixed relationship, by a thin-wall cylindrical metal spacer tube 28.

Each end fitting comprises an outwardly extending externally screw threaded extension 30 projecting outwardly from a radial flange 31, and a stub end 32 which projects inwardly from the radial flange 31 and is provided with an external radial groove 33.

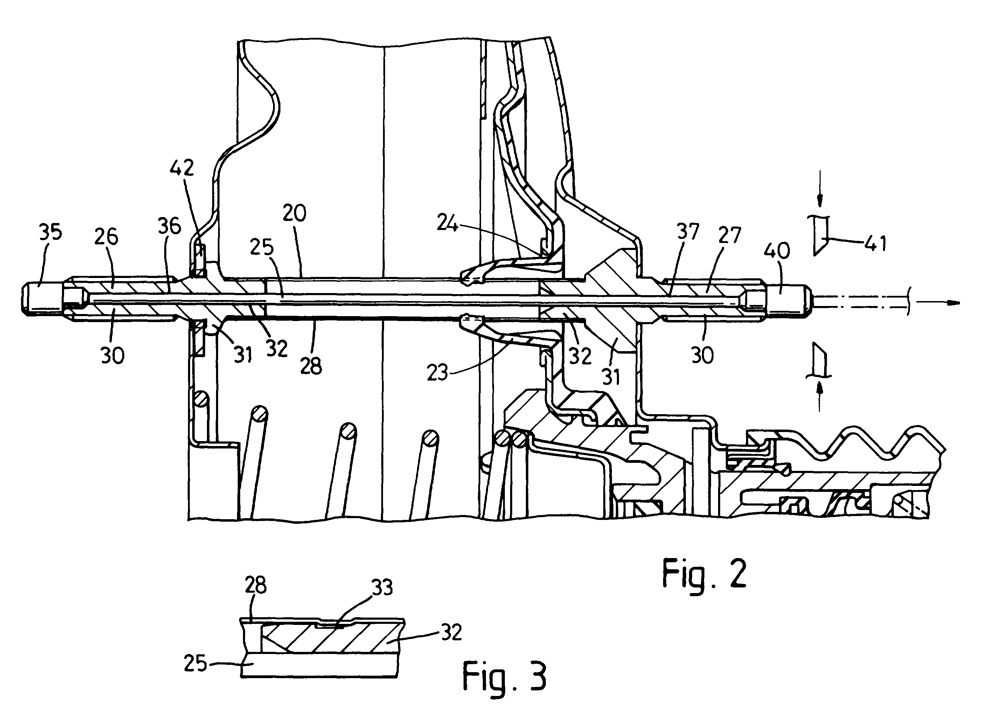

In assembling the tie-rod the stub ends 32 of the two fittings are inserted into opposite ends of the tube 28 in which they are preferably push fits. Thereafter the wall of the tube 28 is crimped into engagement with the grooves 33 as shown in Figure 3 of the accompanying drawing. The grooves 33 allow the tube to recover partly after assembly. This increases the pull-off load above that of the assembly load.

The inextensible member 25 is formed at one end with a collar 35 which abuts against the outer end of the extension 30 as the member 25 is inserted through an axial bore 36 in the outer fitting 26, the tube 28, and an axial bore 37 in the inner fitting 27. A tensile load is then applied to the free end of the member 25 and, at a predetermined load, a collar 40 is crimped to the member to form an abutment with the outer end of the extension 30 of the inner fitting 27. The member is then severed to the required length by the use of shearing apparatus 41.

When the tie-rod 20 is assembled in the boot the radial flange 31 of the fittings 26,27 co-operate with the inner faces of the shells 2 and 3, and a washer 42 provides an abutment against the shell 2. Both flanges are suitably sealed to the respective fittings 26,27.

The externally threaded extensions 30 project through openings in the body of the master cylinder 21 and in the bulk head 22 respectively and receive nuts 45, 46 to clamp the body of the master cylinder against the shell 3, and the shell 2 against the bulk head 22 respectively.

The master cylinder 21 is carried from the bulk head 22 through the inextensible member 25, and the end fittings 30 are held in the desired spaced apart relationship by means of the thin wall cylindrical tube 28. The boot 23 has a slidable running sealing engagement with the outer wall of the tube 28.

Should the vehicle in which the booster is installed be involved in an accident which causes a rearwardly directed force to be applied to the master cylinder 21, that force, in turn, is transmitted to the tie-rod 20. When that load exceeds a predetermined minimum value, movement of the master cylinder 21 in a rearward direction which causes at least the shell 3 of the housing 1 to collapse, also causes the tube 28 to buckle and the inextensible member 25 to collapse. As a result only a minimum load is transmitted to the bulk head 22 through the tie-rod 20. This protects the driver of the vehicle from injury which might otherwise occur due to movement of the tie-rod in a corresponding direction.

When a booster is of tandem construction comprising two compartments, each divided by a movable wall into variable and constant pressure chambers, the tie-rod is increased in length to correspond to the length of the tandem booster and the tube has the sealing engagement with the diaphragms of both movable walls and with a dividing wall between the two compartments.

Other methods of providing connections between the end fittings 26,27 and the inextensible member 25 are also illustrated in the accompanying drawings.

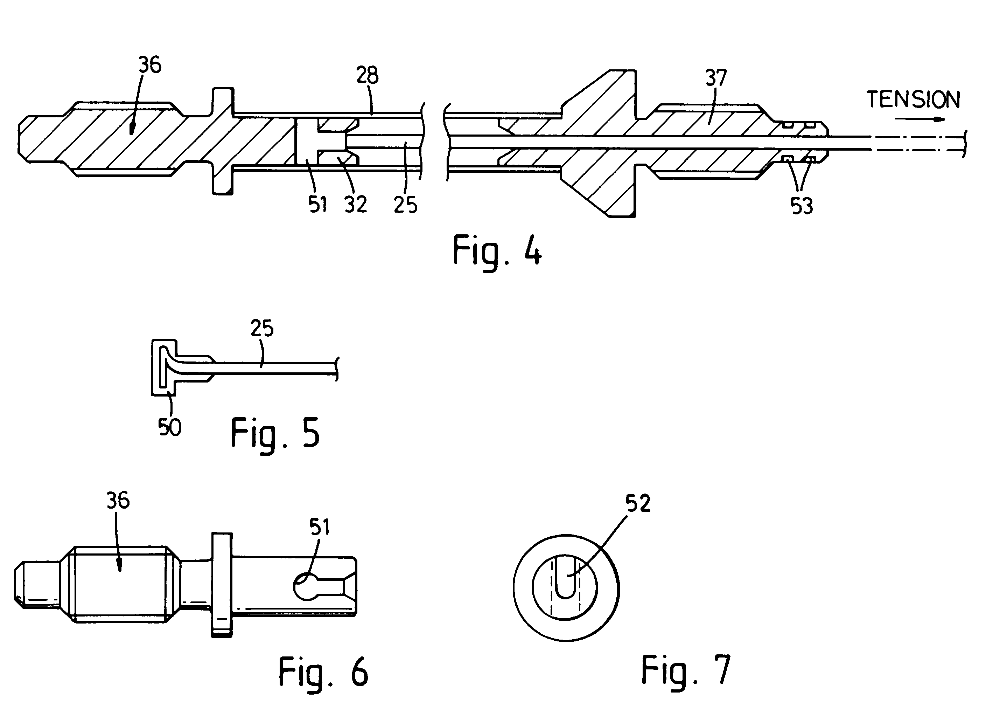

In the tie-rod illustrated in Figures 4-7 the outer end of the member 25 is provided with a cleat 50 of generally tee-outline illustrated in Figure 5. The bore 36 in the outer fitting 26 is replaced by a transverse bore 51 leading into an open sided axial bore 52 to receive the cleat 50. After insertion of the cleat 50 into the fitting 26 the tube 28 receives the stub end 32 and the tie bar is then assembled as described with reference to the tie bar illustrated in the booster of Figures 1-3. However, in this construction, after tensioning the member 25, the extension 30 of the fitting 37 is crimped onto the member 25 at 53.

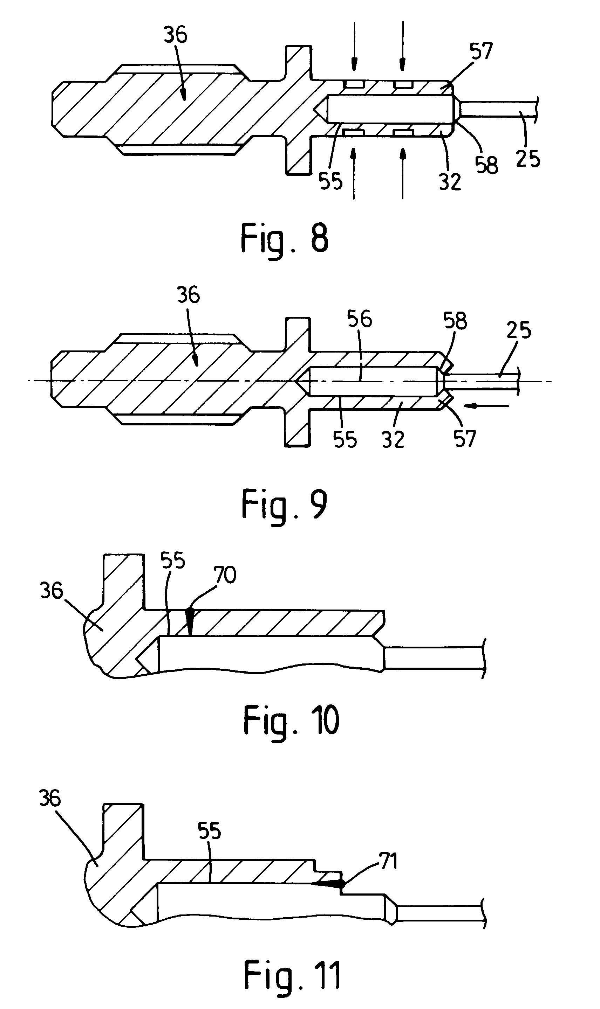

In a modification illustrated in Figures 8 and 9 the stub end 32 is provided with a blind bore 55 to receive an enlargement 56 on the member 25. The wall of the bore is deformed into engagement with the outer face of the enlargement 56, and the outer end of the stub end is deformed or peened into engagement with a shoulder 58 at the adjacent, inner end, of the enlargement.

In the modification illustrated in Figure 10 instead of deforming the material of the stub end mechanically, the wall of the bore 55 can be secured to the outer face of the enlargement 56 by a welding or brazing operation. The weld 70 can be achieved in a radial direction or, as illustrated in Figure 11 at 71, in an axial direction.

In either case the welding operation can be carried out by any convenient method, such as laser, MIG, or TIG.

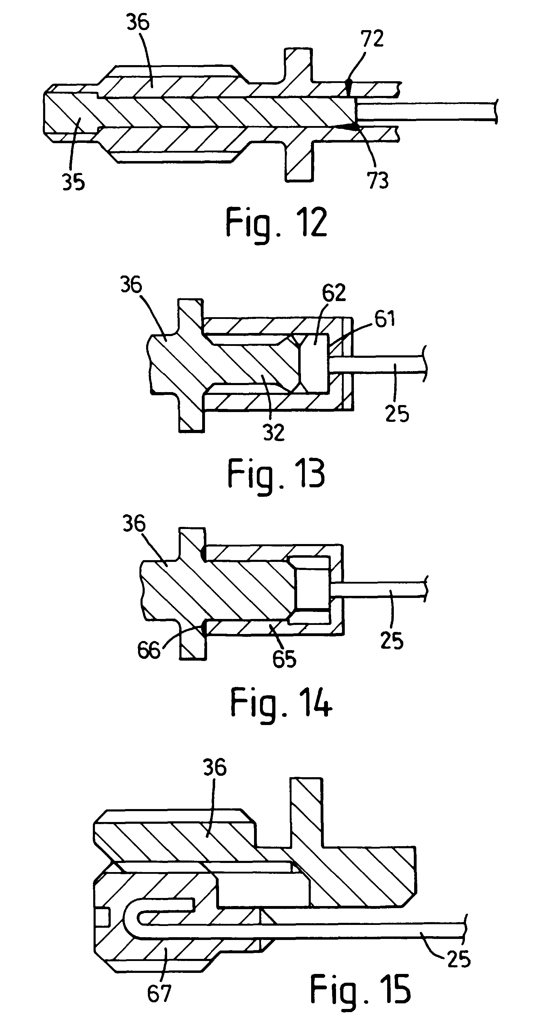

In the end fitting illustrated in Figure 12 of the accompanying drawings, which is similar to that of the tie bar illustrated in the booster of Figures 1 to 3, the collar 35 can be welded or brazed to the fitting at 72 or 73 to stop rotation, by the use of welding or brazing techniques illustrated in Figure 10 or in Figure 11.

In the modification illustrated in Figure 13 the end fitting comprises a solid member and stub end 32 is externally screw threaded to receive a nut 60 provided at its free end with an inwardly directed radial flange 61 which acts to clamp an enlargement 62 at that end of the inextensible member 25 against the stub end 32.

In the construction of Figure 14 the screw threads are omitted from the stub 32 and the nut 60 is replaced by a flanged cap 65 which is welded or brazed at 66 to the adjacent face of the flange 31.

In the embodiment illustrated in Figure 15 of the accompanying drawings one end of the inextensible member 25 is secured in a screw 67 which, in turn, is screwed into an internally screw threaded bore in the end fitting 30.

In all the constructions described above, when a tie-rod is installed in a booster, the engagement of the spacer tube 28 with the end fittings prevents rotation of the fittings relative to the housing 1 as the nuts 45 and 46 are screwed home to clamp the booster against the bulk head and the master cylinder to the booster, respectively.

## Claims

1. A pneumatically-operated booster for vehicle braking systems in which a wall (7) is movable in a booster housing (1) when subjected to pressure differential in order to augment a brake-applying force from a pedal which, in turn, is applied to a master cylinder, and at least one tie-rod (20) extends through the movable wall (7) and the booster housing (1) in order to carry the master cylinder from a bulk head for a vehicle, characterised in that the tie rod (20) is adapted to collapse when subjected to a compressive force substantially in an axial direction and the tie-rod (20) includes a collapsible substantially inextensible member (25) which is tensioned to form a tie between a pair of end fittings (26,27) adapted to co-operate with opposed end walls (2,3) of the booster housing (1) and which are also adapted to be coupled between a bulk head and a master cylinder adapted to be operated by the booster, and whereby the end fittings (26,27) are held at a predetermined spacing by means of a spacer tube (28) of which opposite ends co-operate with the fittings and with a substantial clearance provided between the tube and the inextensible member, a tensile force being applied between the two fittings from the member to maintain the fittings in abutment with the ends of the tube.

2. A booster according to claim 1, in which the inextensible member is of single filament construction.

3. A booster according to claim 1, in which the inextensible member is of multi-filament construction.

4. A booster according to any of claims 1 to 3, in which radial flanges (31) on the end fittings (26,27) co-operate with internal faces of the end walls (2,3) of the booster housing (1) surrounding openings through which the fittings project, and the external surface of the tube (28) comprises a running surface with which a seal (23) on the movable wall sealingly engages.

5. A booster according to any preceding claim, in which opposite ends of the tube (28) are fixedly secured to the end fittings (26,27).

6. A booster according to claim 5, in which stub ends (32) of the end fittings (26,27) are received in opposite ends of the tube (28) and the wall of the tube is crimped into engagement with recesses (33) in the stub ends.

7. A booster according to any preceding claim, in which the inextendible member (25) is anchored at the one end in a respective end fitting, and a portion of the other end is withdrawn through the other end fitting to apply a tension to the member (25), means being provided to secure the member to the said other end fitting to retain the tension in the member.

8. A tie-rod adapted to extend through a movable wall (7) and opposed end walls (2,3) of a housing (1) of a booster to carry a master cylinder from a bulkhead of a vehicle characterised in that the tie rod (20) includes a collapsible substantially inextensible member (25) which is tensioned to form a tie between a pair of end fittings (26,27) adapted to co-operate with the end walls, and also adapted to be coupled between the bulkhead and the master cylinder, and whereby the end fittings (26,27) are held at a predetermined spacing by means of a spacer tube (28) of which opposite ends co-operate into the fittings (26,27), and a substantial clearance is provided between the tube and the inextensible member (25), a tensile force being applied between the two fittings from the member to maintain the fittings in abutment with the ends of the tube.

9. A tie-rod according to claim 8, in which opposite ends of the tube (28) are fixedly secured to the end fittings (26,27).

10. A tie-rod according to claim 9, in which stub ends (32) of the end fitting (26,27) are received in opposite ends of the tube (28), and the wall of the tube is crimped into engagement with recesses (33) in the stub ends.

11. A tie-rod according to any of claims 8-10, in which each end fitting (26,27) is formed with an externally projecting externally threaded extension (30), and the extension (30) receive nuts (45,46) for securing opposite ends of the tie-rod (20) between the bulkhead and the master cylinder.

12. A tie-rod according to any of claims 8-11, in which one end of the inextensible member (25) is anchored in a respective end fitting, and the opposite end is anchored in the other end fitting to retain the tension in the member by use of anchoring means.

13. A tie-rod according to claim 12, in which the anchoring means comprises a mechanical thickening or collar.

14. A tie-rod according to claim 12, in which the anchoring means comprises a welded or brazed connection.

15. A tie-rod according to claim 12, in which the anchoring means is achieved by a crimping or peening operation.

## Patentansprüche

1. Pneumatischer Kraftverstärker für Fahrzeugbremsanlagen, bei dem eine Wand (7) in einem Verstärkergehäuse (1) bewegbar ist, wenn sie einer Druckdifferenz ausgesetzt ist, um eine bremsbetätigende Kraft von einem Pedal zu erhöhen, die ihrerseits an einem Hauptzylinder angewendet wird, und wenigstens eine Verbindungsstange (20) sich durch die bewegbare Wand (7) sowie das Verstärkergehäuse (1) erstreckt, um den Hauptzylinder an einer Spritzwand für ein Fahrzeug abzustützen, dadurch gekennzeichnet, daß die Verbindungsstange (20) geeignet ist zusammengedrückt zu werden, wenn sie einer zusammenpressenden Kraft im wesentlichen in einer axialen Richtung ausgesetzt ist, und die Verbindungsstange (20) ein zusammendrückbares im wesentlichen nicht dehnbares Glied (25) aufweist, das gespannt ist, um ein Zugglied zwischen einem Paar Endanschlußstücke (26,27) zu bilden, die geeignet sind, mit einander gegenüberliegenden Stirnwänden (2,3) des Verstärkergehäuses (1) zusammenzuwirken, und die auch geeignet sind, zwischen einer Spritzwand und einem vom Verstärker betätigbaren Hauptzylinder gekuppelt zu werden, und wobei die Endanschlußstücke (26,27) in einem vorbestimmten Abstand mittels eines Abstandsrohres (28) gehalten sind, von dem entgegengesetzte Enden mit den Anschlußstücken zusammenwirken, und mit einem zwischen dem Rohr und dem nicht dehnbaren Glied vorgesehenen erheblichen Abstand, wobei zwischen den beiden Anschlußstücken vom Glied eine Zugkraft angewendet wird, um die Anschlußstücke an den Enden des Rohres abgestützt zu halten.

2. Kraftverstärker nach Anspruch 1, bei dem das nicht dehnbare Glied Teil einer Einzelfaden-Konstruktion ist.

3. Kraftverstärker nach Anspruch 1, bei dem das nicht dehnbare Glied Teil einer Mehrfaden-Konstruktion ist.

4. Kraftverstärker nach einem der Ansprüche 1 bis 3, bei dem radiale Flansche (31) an den Endanschlußstücken (26,27) mit Innenflächen der Stirnwände (2,3) des Verstärkergehäuses (1) zusammenwirken, die Öffnungen umgeben, durch welche die Anschlußstücke ragen, und die Außenfläche des Rohres (28) eine Lauffläche aufweist, an die eine Dichtung (23) an der bewegbaren Wand abdichtend angreift.

5. Kraftverstärker nach einem der vorhergehenden Ansprüche, bei dem die entgegengesetzten Enden des Rohres (28) an den Endanschlußstücken (26,27) unverschiebbar befestigt sind.

6. Kraftverstärker nach Anspruch 5, bei dem Stummelenden (32) der Endanschlußstücke (26,27) in den entgegengesetzten Enden des Rohres (28) aufgenommen sind und die Wand des Rohres in Eingriff mit Vertiefungen (33) in den Stummelenden gecrimpt ist.

7. Kraftverstärker nach einem der vorhergehenden Ansprüche, bei dem das nicht dehnbare Glied (25) an dem einen Ende in einem zugehörigen Endanschlußstück verankert ist, und ein Abschnitt des anderen Endes durch das andere Endanschlußstück gezogen ist, um auf das Glied (25) Zug auszuüben, wobei Einrichtungen vorgesehen sind, um das Glied an dem genannten anderen Endanschlußstück zu befestigen, um den Zug in dem Glied zu halten.

8. Verbindungsstange, die geeignet ist, sich durch eine bewegbare Wand (7) und entgegengesetzte Stirnwände (2,3) eines Gehäuses (1) eines Kraftverstärkers zu erstrecken, um einen Hauptzylinder an einer Spritzwand eines Fahrzeugs abzustützen, dadurch gekennzeichnet, daß die Verbindungsstange (20) ein zusammendrückbares, im wesentlichen nicht dehnbares Glied (25) aufweist, das gespannt ist, um ein Zugglied zwischen einem Paar Endanschlußstücke (26,27) zu bilden, die geeignet sind, mit den Stirnwänden zusammenzuwirken, und die auch geeignet sind, zwischen die Spritzwand und den Hauptzylinder gekuppelt zu werden, und wobei die Endanschlußstücke (26,27) in einem vorbestimmten Abstand mittels eines Abstandsrohres (28) gehalten sind, von dem entgegengesetzte Enden mit den Anschlußstücken (26,27) zusammenwirken, und zwischen dem Rohr und dem nicht dehnbaren Glied (25) ein erheblicher Abstand vorgesehen ist, wobei zwischen den beiden Anschlußstücken vom Glied eine Zugkraft angewendet wird, um die Anschlußstücke an den Enden des Rohres abgestützt zu halten.

9. Verbindungsstange nach Anspruch 8, bei der die entgegengesetzten Enden des Rohres (28) an den Endanschlußstücken (26,27) unverschiebbar befestigt sind.

10. Verbindungsstange nach Anspruch 9, bei der Stummelenden (32) der Endanschlußstücke (26,27) in den entgegengesetzten Enden des Rohres (28) aufgenommen sind und die Wand des Rohres in Eingriff mit Vertiefungen (33) in den Stummelenden gecrimpt ist.

11. Verbindungsstange nach einem der Ansprüche 8-10, bei der jedes Endanschlußstück (26,27) mit einem nach außen ragenden Fortsatz (30) mit Außengewinde ausgebildet ist, und der Fortsatz (30) Muttern (45,46) zum Befestigen der entgegengesetzten Enden der Verbindungsstange (20) zwischen der Stützwand und dem Hauptzylinder aufnimmt.

12. Verbindungsstange nach einem der Ansprüche 8-11, bei der ein Ende des nicht dehnbaren Glieds (25) an einem zugehörigen Endanschlußstück verankert ist, und das entgegengesetzte Ende in dem anderen Endanschlußstück verankert ist, um den Zug in dem Glied durch Verwenden von Verankerungseinrichtungen aufzunehmen.

13. Verbindungsstange nach Anspruch 12, bei der die Verankerungseinrichtungen eine mechanisch erzeugte Verdickung oder einen Kragen aufweisen.

14. Verbindungsstange nach Anspruch 12, bei der die Verankerungseinrichtungen eine Schweiß- oder Lötverbindung aufweisen.

15. Verbindungsstange nach Anspruch 12, bei der die Verankerungseinrichtungen von einem Crimp- oder Schlagvorgang erzeugt sind.

## Revendications

1. Amplificateur actionné pneumatiquement pour des systèmes de freinage de véhicules, dans lequel une paroi (7) est déplaçable dans un boîtier (1) de l'amplificateur lorsqu'elle est soumise à une différence de pression de manière à augmenter une force de serrage des freins à partir d'une pédale qui à son tour est reliée à un maître-cylindre, et au moins une barre de liaison (20) traverse la paroi mobile (7) et le boîtier (1) de l'amplificateur pour supporter le maître-cylindre à partir d'une cloison pour un véhicule, caractérisé en ce que la barre de liaison (20) est apte à fléchir lorsqu'elle est soumise à une force de compression dirigée essentiellement dans une direction axiale, et la barre de liaison (20) comprend un élément essentiellement inextensible (25) apte à fléchir, qui est placé en traction de manière à établir une liaison entre un couple de supports d'extrémité (26, 27) adaptés pour coopérer avec des parois d'extrémité opposées (2, 3) du boîtier (1) de l'amplificateur et qui sont également adaptées pour être couplées entre une cloison et un maître-cylindre adapté pour être actionné par l'amplificateur, et dans lequel les supports d'extrémité (26, 27) sont maintenus, à un espacement prédéterminé, au moyen d'un tube d'entretoisement (28), dont les extrémités opposées coopèrent avec les supports, et avec un jeu substantiel prévu entre le tube et l'élément inextensible, une force de traction étant appliquée entre les deux supports à partir de l'élément pour maintenir les supports en butée avec les extrémités du tube.

2. Amplificateur selon la revendication 1, dans lequel l'élément inextensible possède une structure formée d'un seul filament.

3. Amplificateur selon la revendication 1, dans lequel l'élément inextensible possède une structure formée de plusieurs filaments.

4. Amplificateur selon l'une quelconque des revendications 1 à 3, dans lequel des brides radiales (31) situées sur les supports d'extrémité (26, 27) coopèrent avec des faces internes des parois d'extrémité (2, 3) du boîtier (1) de l'amplificateur entourant des ouvertures à travers lesquelles les supports sont en saillie, et la surface extérieure du tube (28) comprend une surface de coulissement, contre laquelle s'applique de façon étanche un joint d'étanchéité (23) situé sur la paroi mobile.

5. Amplificateur selon l'une quelconque des revendications précédentes, dans lequel les extrémités opposées du tube (28) sont fixées fermement aux supports d'extrémité (26, 27).

6. Amplificateur selon la revendication 5, dans lequel des extrémités en forme d'embouts (32) des supports d'extrémité (26, 27) sont reçues dans des extrémités opposées du tube (28), et la paroi du tube est moulurée de manière à s'engager dans des renfoncements (33) situés dans les extrémités en forme d'embouts.

7. Amplificateur selon l'une quelconque des revendications précédentes, dans lequel l'élément inextensible (25) est ancré, au niveau de l'une de ses extrémités, dans un support d'extrémité respectif, et une partie de l'autre extrémité est tirée à travers l'autre support d'extrémité pour appliquer une traction à l'élément (25), des moyens étant prévus pour fixer l'élément audit autre support d'extrémité pour maintenir la traction dans cet élément.

8. Tige de liaison adaptée pour traverser une paroi mobile (7) et des parois d'extrémité opposées (2, 3) d'un boîtier (1) d'un amplificateur pour supporter un maître-cylindre à partir d'une cloison d'un véhicule, caractérisée en ce que la tige de liaison (20) comprend un élément essentiellement inextensible (25) apte à fléchir, qui est placé en traction de manière à établir une liaison entre un couple de supports d'extrémité (26, 27) adaptés pour coopérer avec les parois d'extrémité, et qui sont également adaptées pour être couplées entre la cloison et le maître-cylindre, et dans lequel les supports d'extrémité (26, 27) sont maintenus à un écartement prédéterminé au moyen d'un tube d'entretoisement (28), dont les extrémités opposées coopèrent dans les supports (26, 27), et un jeu substantiel est prévu entre le tube et l'élément inextensible (25), une force de traction étant appliquée entre les deux supports à partir de l'élément pour maintenir les supports en butée contre les extrémités du tube.

9. Tige de liaison selon la revendication 8, dans laquelle des extrémités opposées du tube (28) sont fixées de façon ferme aux supports d'extrémité (26, 27).

10. Tige de liaison selon la revendication 9, dans laquelle des extrémités en forme d'embouts (32) des supports d'extrémité (26, 27) sont reçues dans des extrémités opposées du tube (28), et la paroi du tube est moulurée de manière à s'engager dans des renfoncements (33) situés dans les extrémités en forme d'embouts.

11. Tige de liaison selon l'une quelconque des revendications 8 à 10, dans laquelle chaque support d'extrémité (26, 27) est pourvu d'un prolongement fileté extérieurement (30) qui fait saillie extérieurement, et le prolongement (30) reçoit des écrous (45, 46) servant à fixer des extrémités de la tige de liaison (20) entre la cloison et le maître-cylindre.

12. Tige de liaison selon l'une quelconque des revendications 8 à 11, dans laquelle une extrémité de l'élément inextensible (25) est ancrée dans un support d'extrémité respectif, et l'extrémité opposée est ancrée dans l'autre support d'extrémité pour maintenir la traction dans l'élément moyennant l'utilisation de moyens d'ancrage.

13. Tige de liaison selon la revendication 12, dans laquelle les moyens d'ancrage comprennent une partie épaissie mécanique ou un collet.

14. Tige de liaison selon la revendication 12, dans laquelle les moyens d'ancrage comprennent une liaison soudée ou brasée.

15. Tige de liaison selon la revendication 12, dans laquelle les moyens d'ancrage sont obtenus au moyen d'une opération de moulurage ou de martelage.
